# FASCICULE DE BREVET EUROPEEN

(11) **EP 1 599 376 B1**
(45) Date de publication et mention de la délivrance du brevet: **30.08.2006**
(21) Numéro de dépôt: 04710416.1
(22) Date de dépôt: 12.02.2004
(51) Int. Cl.: B62D 25/04

(54) **STRUCTURE DE PIED AVANT D'UN VEHICULE AUTOMOBILE**
VORDERE FUSSANORDNUNG IN EINEM PKW
FRONT PILLAR STRUCTURE FOR MOTOR VEHICLE

(30) Priorité: 04.03.2003 FR 0302777
(43) Date de publication de la demande: 30.11.2005
(73) Titulaire: Renault s.a.s., 92100 Boulogne Billancourt (FR)
(72) Inventeur: AUGUIN, Charles, F-92800 Puteaux (FR); BARBE, André, F-92420 Vaucresson (FR); DUGUET, André, F-75009 Paris (FR); FAYARD, Hervé, F-78280 Guyancourt (FR)
(86) Numéro de dépôt international: PCT/FR2004/000317
(87) Numéro de publication internationale: WO 2004/080784

(56) Documents cités:
- EP-A- 0 945 294
- EP-A- 1 132 280

## Description

La présente invention concerne une structure de pied avant d'un véhicule automobile, et plus particulièrement une structure comportant une doublure de pied avant sur laquelle est solidarisée une doublure de montant de baie, une traverse de planche de bord, un bandeau de porte et un élément de liaison entre la traverse de la planche de bord et le pied avant.

Une telle structure limite la rotation, autour d'un axe vertical, du pied avant en cas de choc frontal. Cette rotation est due à la poussée sensiblement longitudinale du bandeau de porte d'une part et à la rotation autour d'un axe vertical du long pied, due à la poussée du longeron sensiblement longitudinale et vers l'intérieur du véhicule, d'autre part. Il est connu, dans différents véhicules automobiles, la présence d'une équerre solidarisée d'une part à la traverse de planche de bord et d'autre part au pied avant. Cette liaison entre l'équerre et le pied avant est réalisée par une vis traversante, selon l'axe transversal du véhicule. Cette vis associé à l'équerre assure ainsi la limitation de la rotation du pied avant, traversée par cette vis.

Cette solution présente l'inconvénient majeur de n'assurer le lien transversal entre la traverse de planche de bord et le pied avant que par la vis traversante. Ce lien transversal nécessaire n'est alors réalisé que de façon partielle et présente de plus une situation de la vis contraignante en après vente. Le document WO2004074073, conformément à art. 54(3)CBE, décrit et représente une structure de pied avant qui présente des caractéristiques géométriques moins pénalisantes en cas de choc dans laquelle un boîtier interne, sur lequel est fixée la planche de bord, est disposé sur la face de la doublure orientée vers l'intérieur du véhicule, un boîtier externe est disposé sur la face de la doublure orientée vers l'extérieur du véhicule, ces deux boîtiers étant liés de sorte à constituer une boîte sensiblement fermée. Une fente est réalisée dans la doublure de pied avant et permet le passage d'une bande matière propre à l'un des boîtiers et venant recouvrir le flanc de l'autre boîtier. Cette bande matière peut appartenir au boîtier interne et recouvrir le flanc du boîtier externe, ou appartenir au boîtier externe et recouvrir le flanc du boîtier interne. Une telle structure de pied avant permet le blocage en rotation, autour d'un axe sensiblement vertical, de la partie du pied avant où sont implantés les deux boîtiers. Toutefois, le long pied est situé à une hauteur inférieure à celle des boîtiers et en cas de choc, et l'intrusion de ce long pied peut entraîner une rotation, autour d'un axe sensiblement vertical, d'une partie inférieure du pied avant. L'ensemble du pied avant est alors fortement sollicité en torsion.

La présente invention propose un perfectionnement de la structure de pied présentée plus haut, visant à favoriser la non-rotation autour d'un axe sensiblement transversal de l'ensemble du pied avant.

Le problem est resolu par les caracteristiques de la revendication independente 1.

En réponse à des objectifs que l'on retrouve invariablement chez les différents constructeurs automobiles, la présente invention se veut également peu coûteuse et peu encombrante.

Pour répondre à ces objectifs, l'invention propose une structure de pied avant d'un véhicule automobile, comportant au moins une doublure de pied avant et un dispositif anti-rotation, caractérisé en ce qu'un dispositif de renfort est disposé sur la face de la doublure orientée vers l'extérieur du véhicule, un premier support inférieure de ce dispositif de renfort étant dans le prolongement d'un long pied situé vers l'intérieur du véhicule par rapport à la doublure de pied avant, un deuxième support supérieur de ce dispositif de renfort étant solidarisée au dispositif anti-rotation.

Le dispositif de renfort peut comporter en outre un troisième support disposé entre le deuxième support supérieur et la doublure de pied avant.

Selon une caractéristique de l'invention, le premier support inférieur peut présenter une forme « en U », composée d'une première branche située dans le prolongement du long pied, d'une base sensiblement perpendiculaire à la première branche et d'une deuxième branche, située également dans le prolongement du long pied, sensiblement perpendiculaire à la base et à une hauteur supérieure de celle de la première branche. Le deuxième support supérieur peut alors être solidarisé sur la deuxième branche du premier support inférieur, ou sur la première branche de ce premier support inférieur.

Le troisième support peut avantageusement être disposé dans un plan oblique, l'extrémité de ce troisième support fixée sur la doublure étant située dans un plan horizontal plus haut que celui dans lequel est située l'extrémité du troisième support fixée sur le deuxième support supérieur.

Selon une caractéristique de l'invention, la doublure de pied avant présente une extension transversale sur laquelle sont solidarisées la base du premier support inférieur et une extrémité du troisième support.

Selon une caractéristique de la présente invention, l'ensemble formé par le dispositif anti-rotation, le dispositif de renfort et la doublure de pied avant est une boîte fermée. A titre d'exemple, le dispositif anti-rotation est composé d'au moins deux boîtiers, un boîtier interne et un boîtier externe disposés de chaque côté de la doublure de pied avant, et ce boîtier externe, situé du côté de la doublure où est disposé le dispositif de renfort, englobe le dispositif de renfort, une cloison séparant à l'intérieur du boîtier externe ce dispositif de renfort des fonctions d'anti-rotation.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique d'une structure latérale avant d'un véhicule automobile, comportant un pied avant gauche semblable à la présente invention.
- la figure 2 est une vue en perspective d'une structure de pied avant gauche selon l'invention, vue depuis l'extérieur du véhicule à l'avant gauche.

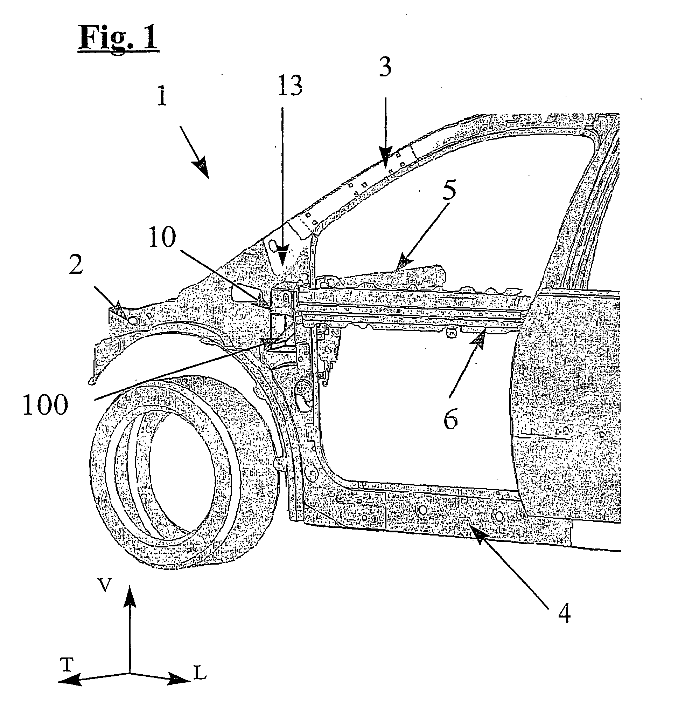

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

La figure 1 décrit et représente une structure de pied avant 1 d'un véhicule automobile. Le pied avant 1 représenté ici est un pied avant gauche. La description qui suivra s'appliquera à ce pied avant gauche, et pourra être étendu au pied avant droit, du fait de la symétrie constatée selon l'axe médian du véhicule.

Ce pied avant 1 est un noeud structurel sur lequel repose entre autres un support d'aile 2, un montant de baie 3, un côté de caisse 4, une traverse de planche de bord 5, un bandeau de porte 6 (qui est articulé sur ce pied avant) et un long pied 7. En cas de choc frontal, la rotation de ce pied avant 1 selon un axe vertical entraîne donc la déformation de l'habitacle, ce qui engendre un risque par rapport à le sécurité des passagers et ce qui est donc contraire aux cahier des charges des constructeurs automobiles.

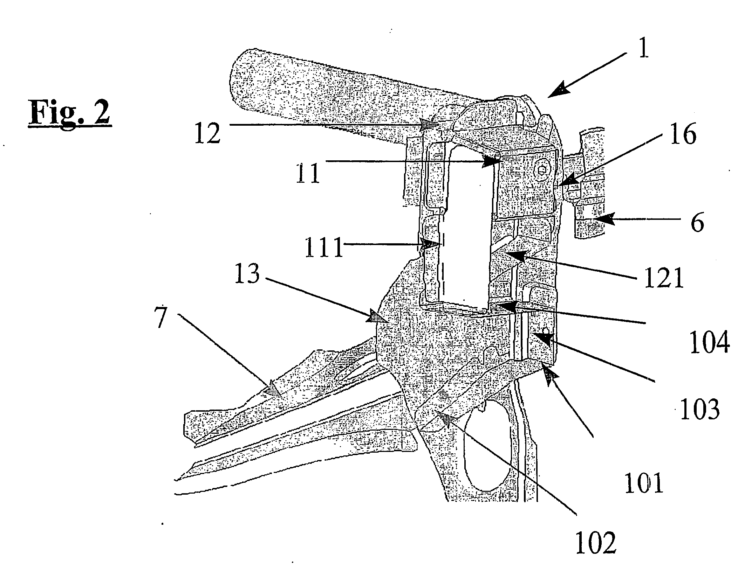

Tel que représenté dans les figures 1 ou 2, un dispositif anti-rotation 10 est disposé sur le pied avant 1, à hauteur de la traverse de planche de bord 5. De préférence, ce dispositif 10 est formé de deux boîtiers 11, 12. Un premier boîtier 11, dit boîtier externe, est disposé sur la face du pied avant 1 orientée vers l'extérieur du véhicule. De façon correspondante, un second boîtier 12, dit boîtier interne, est disposé sur la face du pied avant 1 orientée vers l'intérieur du véhicule. Ces boîtiers 11, respectivement 12 sont fonctionnellement séparés par une doublure 13 du pied avant 1. Ils possèdent des pattes et sont disposés en vis à vis, liés par des points de soudure aux niveaux de ces pattes, de sorte que cet ensemble constitue une boîte sensiblement fermée. Un pion 16, dit « pion anti-burst » est solidarisée sur un flanc transversal du boîtier externe 11, et sert de pion de guidage avec le bandeau de porte 6, de manière à réaliser un accouplement mâle-femelle en cas de choc. Compte tenu de la présence de la doublure 13 de pied avant 1, constituant une véritable frontière entre le boîtier interne 12 et le boîtier externe 11, une fente, non représentée, sur la doublure 13 de pied est aménagée afin de permettre le passage d'une bande matière, également non représentée, appartenant au boîtier interne 12 et orientée transversalement. Cette bande matière peut recouvrir le flanc du boîtier externe 11, en vis à vis de l'autre côté de la doublure 13, ou peut appartenir de façon équivalente au boîtier externe 11 et recouvrir ainsi le flanc du boîtier interne 12, en vis à vis de l'autre côté de la doublure 13.

L'efficacité de cette liaison dite traversante (la bande de matière traverse la doublure de pied 13) est conditionnée par son alignement avec la traverse de planche de bord 5 d'une part, et par le nombre de points de soudures entre la bande matière traversante et le boîtier en vis à vis, d'autre part. Avantageusement, la bande de matière traversante a d'une part la même hauteur que la traverse de planche de bord 5. D'autre part, cette bande de matière, appartenant à un premier boîtier 11, respectivement 12, est soudée avec le second boîtier en vis à vis 12, respectivement 11, par trois points de soudure.

Une telle structure à boîtiers permet d'empêcher la rotation autour d'un axe sensiblement vertical de la partie supérieure du pied avant 1. Un dispositif de renfort 100, fixé sur les boîtiers 11 et 12 et s'étendant vers la partie inférieure du pied avant 1, permet selon la présente invention de maintenir l'ensemble du pied avant 1 dans une configuration de non-rotation autour d'un axe sensiblement vertical.

Un premier support 101, dit support inférieur, est solidarisé sur le pied avant 1, vers l'extérieur du véhicule et à une hauteur inférieure à celle des boîtiers 11 et 12. Ce premier support 101 présente une première branche 102 solidarisée à la doublure 13 de pied avant 1, et située dans le prolongement du long pied 7. Le long pied 7, dans sa configuration au repos, est solidarisé sur le pied avant 1, vers l'intérieur du véhicule, par deux faces d'appui, de telle sorte que la première branche 102 du premier support 101 et l'une des surfaces d'appui du long pied 7 forment une surface continue coupée par le pied avant 1. Lors d'un choc, ce long pied 7 vient s'appuyer fortement sur le pied avant 1, et par extension, contre la première branche 102 du premier support 101. Avantageusement, le premier support 101 présente une forme en « U », dont la base 103 est fixée sur une extension transversale de la doublure 13 de pied avant 1. Une première extrémité de la base 103 porte la première branche 102 et une deuxième extrémité de la base 103 porte une deuxième branche 104 du premier support 101. Cette deuxième branche est solidarisée à la doublure 13 de pied avant 1, dans le prolongement de la deuxième surface d'appui du long pied 7, et est orientée selon un plan sensiblement horizontal. Le premier support 101 offre donc une structure de renfort de la doublure 13 de pied avant, rigidifié par des fixations dans deux plans sensiblement perpendiculaires, le plan de la doublure 13 et celui de son extension radiale.

Un deuxième support 111, dit support supérieur, est solidarisée dans sa partie supérieure sur le boîtier externe 11. Avantageusement, le deuxième support supérieur 111 est placé de telle sorte que l'extrémité supérieure de ce deuxième support 111 corresponde à l'extrémité supérieure du boîtier externe 11. La surface de contact entre le boîtier externe 11 et le deuxième support supérieur 111 est ainsi la plus grande possible et permet une liaison très rigide. Dans la partie inférieure du deuxième support 111, une fixation est réalisée sur la doublure 13 de pied avant 1 et une fixation est réalisée sur le premier support 101, à titre d'exemple sur sa deuxième branche 104. Il sera compris que le premier support 101 peut présenter une forme en « U» avec les première et deuxième branches 102 et 104 dans le prolongement du pied avant 7, ces branches présentant alors des caractéristiques géométriques telles que la fixation du deuxième support 111 sur le premier support 101 pourra être réalisée directement sur la première branche 102 du premier support 101. Ceci permettrait ainsi d'obtenir un ensemble creux, formé par le dispositif anti-rotation 10 et le dispositif de renfort 100, qui soit fermé, ce qui représente un avantage en terme d'optimisation de la structure.

Un troisième support 121 est implanté entre le deuxième support 111, l'extension transversale de la doublure 13 sur laquelle est fixée la base 104 du premier support, et le boîtier externe 11. Une première extrémité est ainsi solidarisée au deuxième support 111 alors que la deuxième extrémité est solidarisée au niveau de la patte de fixation du boîtier externe 11 sur l'extension radiale de la doublure 13 de pied avant 1. Le troisième support 121 peut également être solidarisé à la doublure 13 de pied avant dans un plan perpendiculaire à ses deux précédents plans de fixation. Avantageusement, le troisième support 121 est implanté obliquement de telle sorte que la deuxième extrémité, solidarisée au niveau de la patte de fixation du boîtier externe 11 sur l'extension radiale de la doublure 13 de pied avant 1, soit située à une hauteur supérieure à celle de la première extrémité, solidarisée au deuxième support 111.

Lors d'un choc frontal, le long pied 7 est soumis à un mouvement de rotation, autour d'un axe sensiblement vertical, par la poussée sensiblement longitudinale des longerons avant vers l'intérieur du véhicule. Une intrusion du long pied 7 dans l'habitacle est alors observée. L'agencement des différents supports 101, 111 et 121 va permettre de limiter la rotation et l'intrusion dans l'habitacle du long pied 7.

Le premier support inférieur 101 propose ainsi une raideur d'accueil propice à éviter la déformation du pied avant 1 lors de l'intrusion du long pied 7, grâce aux première et deuxième branche 102, 104 situées dans le prolongement du long pied 7.

Cette raideur d'accueil est solidarisée à la partie du pied avant 1 rendue peu sensible à la rotation, selon un axe sensiblement vertical. Le deuxième support supérieur 111 relie à cet effet le premier support inférieur 101 aux boîtiers 11 et 12.

Afin de soulager la charge en torsion du corps creux formé par les premier et deuxième supports 101 et 111 et par les deux boîtiers 11 et 12, le troisième support 121 est implanté obliquement entre les deux plans parallèles que sont le deuxième support supérieur 111 et l'extension transversale de la doublure 13 de pied avant 1. Le corps creux est ainsi rigidifié par ce troisième support, qui subit alors ces efforts de torsion et qui est solidarisé à la fois au deuxième support supérieur 111, à la doublure 13 de pied avant 1 et son extension transversale.

Avantageusement, l'ensemble formé par le dispositif anti-rotation 10, le dispositif de renfort 100 et la doublure 13 de pied avant 1 est une boîte fermée. A titre d'exemple, le dispositif anti-rotation 10 est composé d'au moins deux boîtiers, un boîtier interne 12 et un boîtier externe 11 disposés de chaque côté de la doublure 13 de pied avant 1, et ce boîtier externe 11, situé du côté de la doublure 13 où est disposé le dispositif de renfort 100, englobe le dispositif de renfort 100, une cloison séparant à l'intérieur du boîtier externe 12 ce dispositif de renfort 100 des fonctions d'anti-rotation.

Il sera compris que l'épaisseur des différents supports 101, 111, 121 du dispositif de support 100 joue un rôle sur la tenue aux efforts de ce dispositif. Ces épaisseurs devront être le plus importantes possibles et équivalentes. Toutefois, pour le respect des cahiers des charges en terme de poids, de coût et d'encombrement, l'épaisseur du deuxième support supérieur 111 pourra être plus importante que celles des premier et troisième support 101, 121. Les matériaux utilisés seront, de préférence, choisis dans le domaine des matériaux à très haute limite élastique. De tels matériaux permettront de meilleures tenues aux efforts, mais il sera compris qu'une réalisation en acier par exemple offrira des caractéristiques apte à limiter la rotation et l'intrusion dans l'habitacle du long pied 7.

L'invention n'est nullement limitée au mode de réalisation décrit et illustré qui n'a été donné qu'à titre d'exemple.

## Revendications

1. Structure de pied avant (1) d'un véhicule automobile, comportant au moins une doublure (13) de pied avant, (1) un dispositif anti-rotation (10) et un dispositif de renfort (100) disposé sur la face de la doublure (13) orientée vers l'extérieur du véhicule, un premier support inférieure (101) de ce dispositif de renfort (100) étant dans le prolongement d'un long pied (7) situé vers l'intérieur du véhicule par rapport à la doublure (13) de pied avant (1), un deuxième support supérieur (111) de ce dispositif de renfort (100) étant solidarisée au dispositif anti-rotation (10).

2. Structure de pied avant selon la revendication 1, **caractérisé en ce que** le dispositif de renfort (100) comporte en outre un troisième support (121) disposé entre le deuxième support supérieur (111) et la doublure (13) de pied avant (1).

3. Structure de pied avant selon la revendication 1 ou 2, **caractérisé en ce que** le premier support inférieur (101) présente une forme « en U », composée d'une première branche (102) située dans le prolongement du long pied (7), d'une base (103) sensiblement perpendiculaire à la première branche (102) et d'une deuxième branche (104) située dans le prolongement du long pied (7), sensiblement perpendiculaire à la base (103) et à une hauteur supérieure à celle de la première branche (102).

4. Structure de pied avant selon la revendication 3, **caractérisé en ce que** le deuxième support supérieur (111) est solidarisé sur la deuxième branche (104) du premier support inférieur (101).

5. Structure de pied avant selon la revendication 3, **caractérisé en ce que** le deuxième support inférieur (111) est solidarisé sur la première branche (102) du premier support inférieur (101).

6. Structure de pied avant selon l'une des revendications 2 à 5, **caractérisé en ce que** le troisième support (121) est disposé dans un plan oblique, l'extrémité de ce troisième support (121) fixée sur la doublure (13) étant située dans un plan horizontal plus haut que celui dans lequel est située l'extrémité du troisième support (121) fixée sur le deuxième support supérieur (111).

7. Structure de pied avant selon l'une des revendications 3 à 6, **caractérisé en ce que** la doublure (13) de pied avant présente une extension transversale sur laquelle sont solidarisées la base (103) du premier support inférieur (101) et une extrémité du troisième support (121).

8. Structure de pied selon l'une des revendications précédentes, **caractérisé en ce que** l'ensemble formé par le dispositif anti-rotation (10), le dispositif de renfort (100) et la doublure (13) de pied avant (1) est une boîte fermée.

9. Structure de pied avant selon la revendication précédente, **caractérisé en ce que** le dispositif anti-rotation (10) est composé d'au moins deux boîtiers, un boîtier interne (12) et un boîtier externe (11) disposés de chaque côté de la doublure (13) de pied avant (1), et **en ce que** le boîtier externe (11), situé du côté de la doublure (13) où est disposé le dispositif de renfort (100), englobe le dispositif de renfort (100), une cloison séparant à l'intérieur du boîtier externe (11) ce dispositif de renfort (100) des fonctions d'anti-rotation.

## Claims

1. Front hinge pillar structure (1) for a motor vehicle, comprising at least one front hinge pillar (1) liner (13), an anti-rotation device (10) and, arranged on the outward face of the liner (13), a reinforcing device (100), a first or lower support (101) for this reinforcing device (100) being in the continuation of a long pillar (7) situated inwards of the vehicle relative to the front hinge pillar (1) liner (13) and a second or upper support (111) for this reinforcing device (100) being connected to the anti-rotation device (10).

2. Front hinge pillar structure according to Claim 1, **characterized in that** the reinforcing device (100) also comprises a third support (121) arranged between the second or upper support (111) and the front hinge pillar (1) liner (13).

3. Front hinge pillar structure according to Claim 1 or 2, **characterized in that** the first or lower support (101) is shaped like a "U" consisting of: a first arm (102) situated in the continuation of the long pillar (7); a base (103) approximately perpendicular to the first arm (102); and a second arm (104) situated in the continuation of the long pillar (7), approximately perpendicular to the base (103) and higher than the first arm (102).

4. Front hinge pillar structure according to Claim 3, **characterized in that** the second or upper support (111) is connected to the second arm (104) of the first or lower support (101).

5. Front hinge pillar structure according to Claim 3, **characterized in that** the second or lower support (111) is connected to the first arm (102) of the first or lower support (101).

6. Front hinge pillar structure according to one of Claims 2 to 5, **characterized in that** the third support (121) is arranged in an oblique plane, that end of this third support (121) which is attached to the liner (13) being situated in a higher horizontal plane than the plane containing that end of the third support (121) which is attached to the second or upper support (111).

7. Front hinge pillar according to one of Claims 3 to 6, **characterized in that** the front hinge pillar liner (13) has an axial extension to which the base (103) of the first or lower support (101) and one end of the third support (121) are connected.

8. Hinge pillar structure according to one of the preceding claims, **characterized in that** the assembly formed by the anti-rotation device (10), the reinforcing device (100) and the front hinge pillar (1) liner (13) is a closed box.

9. Front hinge pillar structure according to the preceding claim, **characterized in that** the anti-rotation device (10) consists of at least two housings, an inner housing (12) and an outer housing (11) which are arranged on each side of the front hinge pillar (1) liner (13), and **in that** the outer housing (11), which is situated on the same side of the liner (13) as the reinforcing device (100), surrounds the reinforcing device (100), while a partition inside the outer housing (11) separates this reinforcing device (100) from the anti-rotation functions.

## Patentansprüche

1. Vorderfußkonstruktion (1) eines Kraftfahrzeugs mit mindestens einer Auskleidung (13) des Vorderfußes (1), einer Drehverhinderungsvorrichtung (10) und einer auf der nach außen des Fahrzeugs weisenden Fläche der Auskleidung (13) angeordneten verstärkungsvorrichtung (100), wobei sich eine erste, untere Stütze (101) dieser Verstärkungsvorrichtung (100) in der Verlängerung eines langen Fußes (7) befindet, der bezüglich der Auskleidung (13) des Vorderfußes (1) nach Innen des Fahrzeugs angeordnet ist, wobei eine zweite, obere Stütze (111) dieser Verstärkungsvorrichtung (100) mit der Drehverhinderungsvorrichtung (10) fest verbunden ist.

2. Vorderfußkonstruktion nach Anspruch 1, **dadurch gekennzeichnet, dass** die Verstärkungsvorrichtung (100) des Weiteren eine dritte Stütze (121) aufweist, die zwischen der zweiten, oberen Stütze (111) und der Auskleidung (13) des Vorderfußes (1) angeordnet ist.

3. vorderfußkonstruktion nach Anspruch 1 oder 2, **dadurch gekennzeichnet, dass** die erste, untere Stütze (101) eine "U"-Form aufweist, die aus einem sich in der Verlängerung des langen Fußes (7) befindenden ersten Schenkel (102), einer im Wesentlichen senkrecht zum ersten Schenkel (102) verlaufenden Basis (103) und einem sich in der Verlängerung des langen Fußes (7), im Wesentlichen senkrecht zur Basis (103) und auf einer größeren Höhe als die des ersten Schenkels (102) befindenden zweiten Schenkel (104) besteht.

4. Vorderfußkonstruktion nach Anspruch 3, **dadurch gekennzeichnet, dass** die zweite obere Stütze (111) fest mit dem zweiten Schenkel (104) der ersten, unteren Stütze (101) verbunden ist.

5. Vorderfußkonstruktion nach Anspruch 3, **dadurch gekennzeichnet, dass** die zweite, untere Stütze (111) fest mit dem ersten Schenkel (102) der ersten, unteren Stütze (101) verbunden ist.

6. Vorderfußkonstruktion nach einem der Ansprüche 2 bis 5, **dadurch gekennzeichnet, dass** die dritte Stütze (121) in einer schrägen Ebene angeordnet ist, wobei sich das an der Auskleidung (13) befestigte Ende dieser dritten Stütze (121) in einer höheren horizontalen Ebene befindet als die, in der sich das an der zweiten, oberen Stütze (111) befestigte Ende der dritten Stütze (121) befindet.

7. Vorderfußkonstruktion nach einem der Ansprüche 3 bis 6, **dadurch gekennzeichnet, dass** die vorderfußauskleidung (13) eine Quererweiterung aufweist, mit der die Basis (103) der ersten, unteren Stütze (101) und ein Ende der dritten Stütze (121) fest verbunden sind.

8. Vorderfußkonstruktion nach einem der vorhergehenden Ansprüche, **dadurch gekennzeichnet, dass** die durch die Drehverhinderungsvorrichtung (10), die Verstärkungsvorrichtung (100) und die Auskleidung (13) des Vorderfußes (1) gebildete Anordnung ein geschlossener Kasten ist.

9. Vorderfußkonstruktion nach dem vorhergehenden Anspruch, **dadurch gekennzeichnet, dass** die Drehverhinderungsvorrichtung (10) aus mindestens zwei Kästen besteht, einem Innenkasten (12) und einem Außenkasten (11), die auf jeder Seite der Auskleidung (13) des Vorderfußes (1) angeordnet sind, und dass der sich auf der Seite der Auskleidung (13), wo die Verstärkungsvorrichtung (100) angeordnet ist, befindende Außenkasten (11) die verstärkungsvorrichtung (100) umfasst, wobei eine Trennwand im Inneren des Außenkastens (11) diese Verstärkungsvorrichtung (100) von den Drehverhinderungsfunktionen trennt.
